# EUROPÄISCHE PATENTSCHRIFT

(11) **EP 1 730 409 B1**
(45) Veröffentlichungstag und Bekanntmachung des Hinweises auf die Patenterteilung: **29.10.2008**
(21) Anmeldenummer: 04804160.2
(22) Anmeldetag: 22.12.2004
(51) Int. Cl.: F16B 13/12, F16B 13/06

(54) **SPREIZDÜBEL**
EXPANDING PLUG
CHEVILLE A EXPANSION

(30) Priorität: 31.03.2004 DE 102004015646
(43) Veröffentlichungstag der Anmeldung: 13.12.2006
(73) Patentinhaber: fischerwerke GmbH & Co. KG, 72178 Waldachtal (DE)
(72) Erfinder: FISCHER, Rainer, 72178 Waldachtal (DE); RENZ, Jürgen, 72202 Nagold (DE)
(74) Vertreter: Suchy, Ulrich Johannes
(86) Internationale Anmeldenummer: PCT/EP2004/014564
(87) Internationale Veröffentlichungsnummer: WO 2005/106259

(56) Entgegenhaltungen:
- EP-A- 0 889 249
- DE-A1- 4 116 173
- DE-C1- 19 645 081
- US-A- 4 518 291

## Beschreibung

Die Erfindung betrifft einen Spreizdübel für Voll- und Hohlbaustoffe mit den Merkmalen des Oberbegriffs des Anspruchs 1 (US-A-4 518 291).

Es sind zwei Grundtypen von Spreizdübeln zur Verankerung in Voll- und Hohlbaustoffen bekannt. Die bekannten Spreizdübel sind in unverformtem Zustand üblicherweise hülsenförmig und bestehen aus Kunststoff. Üblicherweise weisen die bekannten Spreizdübel eine Hülse an einem nachfolgend vorderen Ende genannten Ende und eine weitere Hülse an einem nachfolgend hinteren Ende genannten Ende des Spreizdübels auf. Die Hülse am vorderen Ende des Spreizdübels dient dem Gewindeeingriff einer Spreizschraube beim Eindrehen der Spreizschraube in den Spreizdübel, durch die Hülse am hinteren Ende des Spreizdübels wird die Spreizschraube durchgesteckt. Zwischen den beiden Hülsen befindet sich ein Spreizbereich, der durch in Längsrichtung verlaufende Schlitze gebildet ist. Beim Eindrehen der Spreizschraube in den Spreizbereich weitet die Spreizschraube den Spreizbereich auf, um den Spreizdübel in einem Bohrloch in einem Baustoff zu verankern. Die beiden Hülsen sind üblicherweise einstückig mit dem Spreizbereich.

Beim einem der beiden Grundtypen der Spreizdübel für Voll- und Hohlbaustoffe sind durch die Längsschlitze Spreizschenkel gebildet, die sich in Längsrichtung des Spreizdübels über den Spreizbereich erstrecken und die bei einer Verankerung des Spreizdübels in einem Hohlraum eines Hohlbaustoffs nach Art eines Kniegelenks nach außen knicken. Die Hülse am vorderen Ende des Spreizdübels wird dabei durch das Eindrehen der Spreizschraube in Richtung der Hülse am hinteren Ende des Spreizdübels gezogen, ein Abstand der beiden Hülsen des Spreizdübels verkleinert sich beim Ausknicken der Spreizschenkel. Die nach außen geknickten Spreizschenkel hintergreifen einen Hohlbaustoff formschlüssig und verankern den Spreizdübel dadurch.

Beim anderen Grundtyp der Spreizdübel für Voll- und Hohlbaustoffe sind durch Längsschlitze im Spreizbereich ebenfalls sich in Längsrichtung erstreckende Spreizschenkel gebildet. Beim Verankern in einem Hohlbaustoff verdreht sich die Hülse am vorderen Ende des Spreizdübels beim Eindrehen der Spreizschraube gegenüber der nicht mitdrehenden Hülse am hinteren Ende des Spreizdübels und die Spreizschenkel winden sich zu einer Art Knoten umeinander. Auch hier nähert sich die Hülse am vorderen Ende des Spreizdübels der Hülse am hinteren Ende des Spreizdübels, zusätzlich verdrehen sich die beiden Hülsen gegeneinander. Der von den umeinander gewundenen Spreizschenkeln gebildete Knoten verankert den Spreizdübel ebenfalls formschlüssig durch Hintergriff in einem Hohlraum des Hohlbaustoffs.

In einem Bohrloch in einem Vollbaustoff werden die Spreizschenkel beider Grundtypen bekannter Spreizdübel gleichermaßen von der Spreizschraube nach außen gegen eine Lochwand gedrückt und verankern dadurch den Spreizdübel im Vollbaustoff.

Der Erfindung liegt die Aufgabe zugrunde, zur Verankerung in Voll- und Hohlbaustoffen geeignete Spreizdübel der vorstehend erläuterten Art weiter zu verbessern.

Diese Aufgabe wird erfindungsgemäß durch die Merkmale des Anspruchs 1 gelöst. Der erfindungsgemäße Spreizdübel weist unter anderem wellenförmige Schlitze in seinem Spreizbereich auf. Die Schlitze verlaufen insbesondere in etwa in Längsrichtung des Spreizdübels, d.h. ihre Wellenberge und Wellentäler bzw. eine "Amplitude" der wellenförmigen Schlitze erheben bzw. senken sich in Umfangsrichtung des Spreizdübels. Die Schlitze können auch in einem Winkel schräg zur Längsrichtung des Spreizdübels verlaufen. Vorzugsweise erstrecken sich die Schlitze nur über einen Teil einer Länge des Spreizbereichs, es sind mehrere Schlitze in Längsrichtung des Spreizdübels aufeinanderfolgend angeordnet. Die Schlitze erstrecken sich über bspw. in etwa eine Periode einer Welle, d.h. ein Schlitz umfasst einen Wellenberg und ein Wellental bzw. eine Wellenlänge. In Weiterbildung der Erfindung ist vorgesehen, dass in Längsrichtung des Spreizdübels aufeinanderfolgende Schlitze einander in Längsrichtung überdecken. Die Überdeckung kann bspw. etwa ein Viertel einer Periode einer Welle, also etwa die Hälfte einer Länge eines Wellenbergs oder eines Wellentals betragen. Ein in etwa sinusförmiger Verlauf hat sich als geeignet für die Schlitze erwiesen.

Die Verankerung des erfindungsgemäßen Spreizdübels in einem Bohrloch in einem Vollbaustoff erfolgt wie an sich bekannt durch Eindrehen einer Spreizschraube in den in das Bohrloch eingebrachten Spreizdübel. Die Spreizschraube drückt den Spreizdübel auseinander und weitet ihn im Spreizbereich auf, der Spreizdübel wird gegen die Bohrlochwandung gedrückt und dadurch im Vollbaustoff verankert.

Bei der Verankerung in einem Hohlbaustoff zieht eine in den erfindungsgemäßen Spreizdübel eingedrehte Spreizschraube dessen vorderes Ende in Richtung seines hinteren Endes, der Spreizbereich wird wie bei den bekannten Spreizdübeln axial verkürzt d.h. gestaucht. Durch die wellenförmigen Schlitze bildet der Spreizdübel dabei eine Art Ringe in einen Spreizbereich, die nach außen gedrängt werden, d.h. ihren Durchmesser vergrößern. Dabei verdreht sich das vordere Ende des Spreizdübels nicht gegenüber seinem hinteren Ende. Die ringähnliche Aufweitung des Spreizbereichs ergibt eine große, die Spreizschraube umgebende Anlagefläche des Spreizdübels, die einen guten Hintergriff des Spreizdübels in einem Hohlraum eines Hohlbaustoffes und damit eine gute Verankerung bewirkt. Verglichen mit einem Spreizdübel mit nach Art von Kniegelenk nach außen knickenden Spreizzungen, bei denen eine Spreizkraft und damit ein Eindrehmoment der Spreizschraube nach Beginn des Ausknickens stark abfällt, hat der erfindungsgemäße Spreizdübel den Vorteil, dass das Eindrehmoment der Spreizschraube bei der Verankerung in einem Hohlbaustoff nicht oder allenfalls wenig abnimmt. Der erfindungsgemäße Spreizdübel vermittelt deswegen nicht das Gefühl, der Spreizdübel habe sich im Hohlbaustoff gelöst und sei nicht ordnungsgemäß verankert. Im Vergleich mit einem Spreizdübel, dessen Spreizschenkel sich umeinander winden hat der erfindungsgemäße Spreizdübel den Vorteil, dass sich sein vorderes Ende nicht gegenüber seinem hinteren Ende verdreht. Dadurch verringert sich die Anzahl der Drehungen zum Eindrehen der Spreizschraube. Außerdem federt der Spreizdübel beim Eindrehen der Spreizschraube von Hand nicht oder nur wenig entgegen der Eindrehrichtung zurück, wenn ein Schraubendreher zum Weiterdrehen neu gefasst werden muss.

Eine Ausgestaltung der Erfindung sieht vor, dass Schlitze einander gegenüberliegend d.h. in Umfangsrichtung des Spreizdübels um in etwa 180° versetzt angeordnet sind. Auch wenn in Umfangsrichtung eine andere Anzahl Schlitze und eine andere Möglichkeit der Verteilung der Schlitze über den Umfang möglich ist eignet sich ein Spreizdübel mit einander gegenüberliegend angeordneten Schlitzen wegen der Entformbarkeit aus einer zweiteiligen Form zum Spritzgießen aus Kunststoff.

Eine Ausgestaltung der Erfindung sieht eine Drehsicherung des Spreizdübels vor, die sich spiralförmige in einer Eindrehrichtung einer Spreizschraube gegenüber einem Umfang des Spreizdübels erhebt. Die vorzugsweise paarweise einander gegenüberliegend ausgebildete Drehsicherung wird beim Einbringen des Spreizdübels in ein Bohrloch elastisch nach innen gedrückt und beim Eindrehen der Spreizschraube von dieser nach außen gedrückt. Die Drehsicherung ist sägezahnförmig und bildet, wenn sie sich in den Baustoff eindrückt, eine der Eindrehrichtung der Spreizschraube entgegengerichtete Drehsperre. Diese Ausgestaltung der Erfindung ist gemeinsam oder auch unabhängig von den wellenförmigen Schlitzen im Spreizbereich an einem erfindungsgemäßen Spreizdübel ausführbar.

Die Erfindung wird nachfolgend anhand eines in der Zeichnung dargestellten Ausführungsbeispiels näher erläutert. Es zeigen:
- Figur 1: einen erfindungsgemäßen Spreizdübel in Ansicht;
- Figur 2: den Spreizdübel aus Figur 1 in um 90° gedrehter Darstellung; und
- Figur 3: den Spreizdübel aus Figuren 1 und 2 verankert in einem Hohlbaustoff.

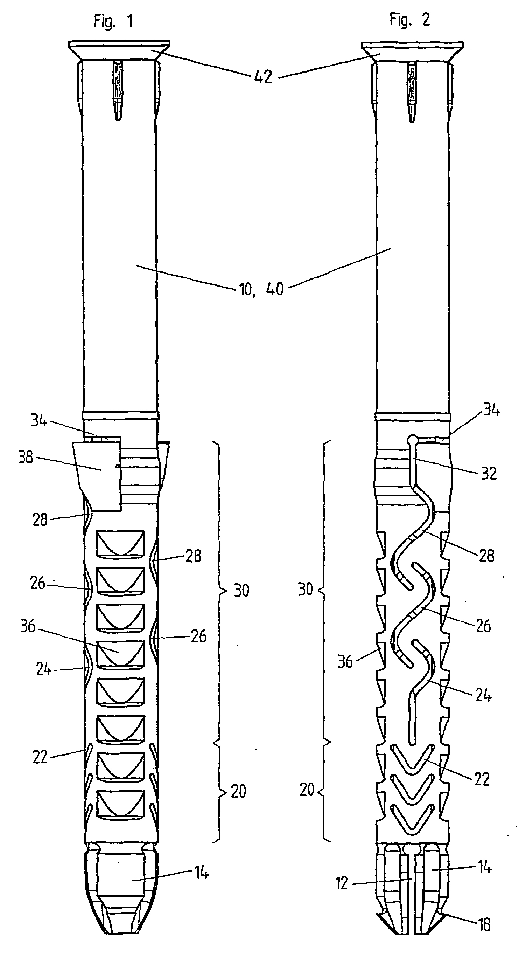

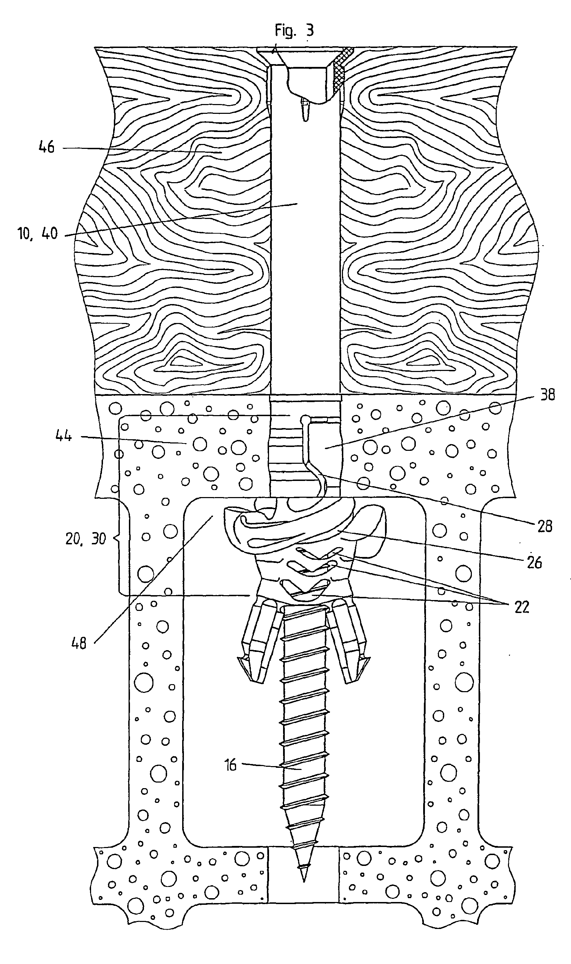

Der in Figuren 1 und 2 dargestellte, erfindungsgemäße Spreizdübel 10 ist als sog. Rahmendübel ausgeführt, er eignet sich zur Verankerung in Voll- und Hohlbaustoffen. Der Spreizdübel 10 ist einstückig durch Spritzgießen aus Kunststoff hergestellt und im wesentlichen hülsenförmig. Die Beschreibung des Spreizdübels 10 wird nachfolgend von einem nachfolgend vorderen Ende genannten zu einem nachfolgend hinteren Ende genannten Ende des Spreizdübels 10 erfolgen. Am vorderen Ende ist der Spreizdübel 10 durch einen Axialschlitz 12 in zwei laschenförmige Ankerelemente 14 unterteilt, die beim Eindrehen einer Spreizschraube 16 wie in Figur 3 zu sehen auseinander klaffen. Die Ankerelemente 14 sind mit Widerhaken 18 versehen. Der Axialschlitz 12 weist eine Länge auf, die ungefähr einem Durchmesser des Spreizdübels 10 entspricht.

An die Ankerelemente 14 schließt sich ein Längsabschnitt 20 an, in dem der Spreizdübel 10 V-förmige Schlitze 22 aufweist. Im dargestellten Ausführungsbeispiel der Erfindung sind aufeinander gegenüberliegenden Seiten eines Umfangs des Spreizdübels 10 drei V-förmige Schlitze 22 in Längsrichtung hintereinander angeordnet. Scheitel oder Spitzen der V-förmigen Schlitze 22 weisen in Richtung des vorderen Endes des Spreizdübels 10. Die V-förmigen Schlitze 22 dienen einem Gewindeeingriff der Spreizschraube 16. Dabei dient ein Schenkel der V-förmigen Schlitze 22 dem Gewindeeingriff, der andere, in etwa quer dazu verlaufende Schenke! ermöglicht eine Anpassung an eine Gewindesteigung der Spreizschraube 16. Aufgrund einer Elastizität des Kunststoffs, aus dem der Spreizdübel 10 besteht, passt sich der eine, in Eingriff mit dem Gewinde der Spreizschraube 16 stehende Schenkel der V-förmigen Schlitze 22 an eine Gewindesteigung der Spreizschraube 16 an.

In Richtung des hinteren Endes des Spreizdübels 10 schließen sich an die V-förmigen Schlitze 22 wellenförmige Schlitze 24, 26, 28 an, durch die ein sich in Längsrichtung des Spreizdübels 10 erstreckender Spreizbereich 30 gebildet ist. Im dargestellten und beschriebenen Ausführungsbeispiel der Erfindung sind drei sinusförmige Schlitze 24, 26, 28 in Längsrichtung des Spreizdübels 10 nacheinander angeordnet, die an gegenüberliegenden Umfangsstellen noch einmal identisch vorhanden sind. Ein erster wellenförmiger Schlitz 24 verläuft zunächst gerade in axialer Richtung und geht anschließend in eine Halbwelle über. Der nächste Schlitz 26 bildet eine volle, sich über eine "Periode" oder "Wellenlänge" erstreckende Welle mit einem Wellenberg und einem Wellental. Der dritte Schlitz 28 bildet ebenfalls eine volle Welle, wobei sich an einem hinteren Ende ein gerader, in axialer Richtung verlaufender Abschnitt 32 anschließt. An einem hinteren Ende ist der gerade Abschnitt 32 in Umfangsrichtung zu einem Querschlitz 34 abgewinkelt. Die wellenförmigen Schlitze 24, 26, 28 verlaufen in einer Längsrichtung des Spreizdübels 10, Wellenberge und Wellentäler bzw. Amplituden weisen in einer Umfangsrichtung des Spreizdübels 10. In Längsrichtung überdecken sich die wellenförmigen Schlitze 24, 26, 28 um etwa ein Viertel einer Periode, d.h. um etwa eine Hälfte eines Wellenberges bzw. eines Wellentals.

Im Bereich der V-förmigen Schlitze 22 und der wellenförmigen Schlitze 24, 26, 28 weist der Spreizdübel 10 eine Sägezahnprofilierung 36 an einander gegenüberliegenden Seiten auf. Die Sägezahnprofilierung 36 befindet sich in Umfangsrichtung gesehen zwischen den V-förmigen Schlitzen 22 und zwischen den wellenförmigen Schlitzen 24, 26,28.

Durch den geraden und den in Umfangsrichtung verlaufenden Abschnitt 32, 34 des dritten wellenförmigen Schlitzes 28 sind Laschen 38 gebildet, die sich spiralförmig um weniger als 90° in Umfangsrichtung und in einer Eindrehrichtung der Spreizschraube 16 erstrecken. Die Laschen 38 stehen um etwa eine Wanddicke des Spreizdübels 10 nach außen. Sie bilden sägezahnförmige Drehsicherungen gegen ein Mitdrehen des Spreizdübels 10 beim Eindrehen der Spreizschraube 16.

Hinter den Drehsicherungen 38 setzt sich der Spreizdübel 10 mit einem hülsenförmigen Schaft 40 fort, der keine Schlitze aufweist. An einem hinteren Ende des Spreizdübels 10 erweitert sich der Schaft 40 mit einer trichterförmigen Mündung 42, die zur Aufnahme eines Schraubenkopfs ( Senkkopf) der Spreizschraube 16 dient.

Im Bereich des Schafts 40 weist der Spreizdübel 10 einen Innendurchmesser auf, der einem Außendurchmesser des Gewindes der Spreizschraube 16 in etwa entspricht oder größer ist, so dass die Spreizschraube 16 durch den Schaft 40 durchsteckbar ist. In den mit Schlitzen 22, 24, 26, 28 versehenen Abschnitten 20, 30 ist eine Wandstärke des Spreizdübels 10 vergrößert und demzufolge eine lichte Innenweite verkleinert, so dass sich ein Schraubengewinde der Spreizschraube 16 in diesen Abschnitten 20, 30 in den Spreizdübel 10 einschneidet und mit dem Spreizdübel 10 in Eingriff steht. Auch ist der Innenquerschnitt in den Abschnitten 20, 30 nicht kreisrund sondern weist vier nach außen stehende Zacken auf. Zwischen den Ankerelementen 14 an seinem vorderen Ende weist der Spreizdübel 10 keinen Schraubkanal sondern nur den Axialschlitz 12 auf.

Eine Verankerung des Spreizdübels 10 in einem nicht dargestellten Bohrloch in einem Vollbaustoff erfolgt, indem der Spreizdübel 10 in das Bohrloch eingebracht und die Spreizschraube 16 eingedreht wird. Die Spreizschraube 16 drückt den Spreizdübel 10 in den mit Schlitzen 22, 24, 26, 28 versehenen Abschnitten 20, 30 auseinander, d.h. die Spreizschraube 16 weitet den Spreizdübel 10 auf und verankert ihn dadurch in dem nicht dargestellten Bohrloch.

Die Verankerung des Spreizdübels 10 in einem Hohlbaustoff, bspw. einen Hohlblockstein 44, zeigt Figur 3. Ein zu befestigender Gegenstand, bspw. eine Leiste 46 wird auf den Hohlblockstein 44 aufgesetzt und beide werden durchbohrt. Anschließend wird der Spreizdübel 10 durch das Bohrloch durchgesteckt, so dass sein Schaft 40 die Leiste 46 durchdringt und vorzugsweise ein Stück weit in den Hohlblockstein 44 eindringt. Im Spreizbereich 30 mit den wellenförmigen Schlitzen 24, 26, 28 tritt der Dübel 10 in einen Hohlraum 48 aus. Die laschenförmigen Drehsicherungen 38 werden elastisch zusammengedrückt und beim Eindrehen der Spreizschraube 16 von dieser nach außen gedrückt. In einem porösen Baustoff drücken sich die Sicherungen 38 in eine Bohrlochwandung ein und verhindern ein Mitdrehen des Spreizdübels 10 beim Eindrehen der Spreizschraube 16.

Die Spreizschraube 16 wird durch den Schaft 40 des Spreizdübels 10 gesteckt und in die die Schlitze 22, 24, 26, 28 aufwesenden Abschnitte 20, 30 eingedreht. Dabei zieht die Spreizschraube 16 das vordere Ende des Spreizdübels 10 in Richtung des hinteren Endes, der die wellenförmigen Schlitze 24, 26, 28 aufweisende Spreizbereich 30 wird, soweit er sich im Hohlraum 48 befindet, axial gestaucht. Dabei verformen sich Wandungsabschnitte des Spreizdübels 10 zwischen den wellenförmigen Schlitzen 24, 26, 28 zu ringförmigen, miteinander verbundenen Elementen, die radial nach außen gedrängt werden. Diese Ringe hintergreifen den Hohlblockstein 44 im Hohlraum 48 und verankern dadurch den Spreizdübel 10 formschlüssig im Hohlbaustein 44. Die durch das axiale Stauchen des Abschnitts 20 gebildeten Ringe liegen teilweise ineinander und teilweise axial gestaffelt hintereinander, so dass sich eine große, die Spreizschraube 16 umgebende Anlagefläche im Hohlblockstein 44 und eine gegenseitige axiale Abstützung der gebildeten Ringe aneinander und am Schraubengewinde der Spreizschraube 16 ergibt.

## Patentansprüche

1. Spreizdübel, mit einem sich in einer Längsrichtung des Spreizdübels erstreckenden, durch Eindrehen einer Spreizschraube aufweitbaren Spreizbereich, wobei der Spreizdübel (10) im Spreizbereich (30) wellenförmige Schlitze (24, 26, 28) aufweist, und wobei sich in Längsrichtung aufeinander folgende Schlitze überdecken, **dadurch gekennzeichnet, dass** sich die in Längsrichtung aufeinander folgenden Schlitze um etwa ein Viertel einer Periode einer Welle überdecken.

2. Spreizdübel nach Anspruch 1, **dadurch gekennzeichnet, dass** die Schlitze (24, 26, 28) in etwa in Längsrichtung des Spreizdübels (10) verlaufen.

3. Spreizdübel nach Anspruch 1, **dadurch gekennzeichnet, dass** sich ein Schlitz (24, 26, 28) nur über einen Teil einer Länge des Spreizbereichs (30) erstreckt und dass mehrere Schlitze (24, 26, 28) in Längsrichtung des Spreizdübels (10) aufeinander folgend angeordnet sind.

4. Spreizdübel nach Anspruch 1, **dadurch gekennzeichnet, dass** ein Schlitz sich über etwa eine Periode einer Welle erstreckt.

5. Spreizdübel nach Anspruch 1, **dadurch gekennzeichnet, dass** die Schlitze (24, 26, 28) in etwa sinusförmig sind

6. Spreizdübel nach Anspruch 1, **dadurch gekennzeichnet, dass** die Schlitze (24, 26, 28) über einen Umfang des Spreizdübels (10) verteilt angeordnet sind.

7. Spreizdübel nach Anspruch 6, **dadurch gekennzeichnet, dass** die Schlitze (24, 26, 28) einander gegenüberliegend angeordnet sind.

8. Spreizdübel nach Anspruch 1, **dadurch gekennzeichnet, dass** der Spreizdübel (10) eine Drehsicherung aufweist, die spiralförmig in einer Eindrehrichtung einer Spreizschraube (16) über einen Umfang des Spreizdübels (10) vorsteht und die von der Spreizschraube (16) nach außen gedrückt wird.

## Claims

1. Expansible fixing plug, having an expansion region which extends in the longitudinal direction of the expansible fixing plug and is expandable by screwing in an expander screw, wherein the expansible fixing plug (10) has wave-shaped slots (24, 26, 28) in the expansion region (30), and wherein slots following one another in the longitudinal direction overlap, **characterized in that** the slots following one another in the longitudinal direction overlap by about a quarter of the period of a wave.

2. Expansible fixing plug according to claim 1, **characterized in that** the slots (24, 26, 28) run in approximately the longitudinal direction of the expansible fixing plug (10).

3. Expansible fixing plug according to claim 1, **characterized in that** a slot (24, 26, 28) extends only over a portion of the length of the expansion region (30) and a plurality of slots (24, 26, 28) are arranged one after the other in the longitudinal direction of the expansible fixing plug (10).

4. Expansible fixing plug according to claim 1, **characterized in that** a slot extends over about one period of a wave.

5. Expansible fixing plug according to claim 1, **characterized in that** the slots (24, 26, 28) are approximately sinusoidal.

6. Expansible fixing plug according to claim 1, **characterized in that** the slots (24, 26, 28) are distributed around the periphery of the expansible fixing plug (10).

7. Expansible fixing plug according to claim 6, **characterized in that** the slots (24, 26, 28) are arranged opposite one another.

8. Expansible fixing plug according to claim 1, **characterized in that** the expansible fixing plug (10) has an anti-rotation device which projects spirally beyond the periphery of the expansible fixing plug (10) in the screwing-in direction of an expander screw (16) and which is pressed outwards by the expander screw (16).

## Revendications

1. Cheville à expansion, avec une zone d'expansion s'étendant dans une direction longitudinale de la cheville et pouvant être élargie par vissage d'une vis d'expansion, sachant que la cheville à expansion (10) présente dans la zone d'expansion (30) des fentes ondulées (24, 26, 28), et sachant que des fentes se succédant en direction longitudinale se chevauchent, **caractérisée en ce que** les fentes se succédant en direction longitudinale se chevauchent d'environ un quart d'une période d'ondulation.

2. Cheville à expansion selon la revendication 1, **caractérisée en ce que** les fentes (24, 26, 28) s'étendent approximativement dans la direction longitudinale de la cheville à expansion (10).

3. Cheville à expansion selon la revendication 1, **caractérisée en ce qu'**une fente (24, 26, 28) ne s'étend que sur une partie de la longueur de la zone d'expansion (30), et **en ce que** plusieurs fentes (24, 26, 28) sont disposées en se succédant dans la direction longitudinale de la cheville à expansion (10).

4. Cheville à expansion selon la revendication 1, **caractérisée en ce qu'**une fente s'étend sur environ une période d'ondulation.

5. Cheville à expansion selon la revendication 1, **caractérisée en ce que** les fentes (24, 26, 28) sont approximativement sinusoïdales.

6. Cheville à expansion selon la revendication 1, **caractérisée en ce que** les fentes (24, 26, 28) sont disposées en étant réparties sur la circonférence de la cheville à expansion (10).

7. Cheville à expansion selon la revendication 6, **caractérisée en ce que** les fentes (24, 26, 28) sont disposées en étant mutuellement opposées.

8. Cheville à expansion selon la revendication 1, **caractérisée en ce que** la cheville à expansion (10) présente un blocage en rotation qui dépasse en spirale sur la circonférence de la cheville à expansion (10) dans la direction de vissage d'une vis d'expansion (16) et qui est poussé vers l'extérieur par la vis d'expansion (16).
